# FASCICULE DE BREVET EUROPEEN

(11) **EP 2 880 085 B1**
(45) Date de publication et mention de la délivrance du brevet: **22.01.2020**
(21) Numéro de dépôt: 13758914.9
(22) Date de dépôt: 25.07.2013
(51) Int. Cl.: D01D 5/06, D01F 8/00, C08J 5/18, D01F 1/04, G01K 11/12

(54) **MATÉRIAU COMPOSITE THERMOCHROME ET PROCÉDÉ DE FABRICATION D'UN TEL ARTICLE**
THERMOCHROMES VERBUNDMATERIAL UND VERFAHREN ZUR HERSTELLUNG EINES ELEMENTS DARAUS
THERMOCHROMIC COMPOSITE MATERIAL AND METHOD FOR MANUFACTURING SUCH AN ITEM

(30) Priorité: 30.07.2012 FR 1257361
(43) Date de publication de la demande: 10.06.2015
(73) Titulaire: OLIKROM, 33600 Pessac (FR)
(72) Inventeur: MERCADER, Célia, 33400 Talence (FR); DARO, Nathalie, F-33600 Pessac (FR); LETARD, Jean-François, F-33610 Canejan (FR); MAURIAC, Cindy, F-33600 Pessac (FR)
(74) Mandataire: Novagraaf Technologies
(86) Numéro de dépôt international: PCT/FR2013/051796
(87) Numéro de publication internationale: WO 2014/020266

(56) Documents cités:
- EP-A1- 1 221 500
- WO-A1-2007/065996
- WO-A1-2010/086550
- WO-A1-2011/133439
- WO-A1-2012/010801
- DE-A1-102012 100 252
- DE-U1-202005 019 107
- FR-A1- 2 967 258
- JP-A- 2004 137 614
- DATABASE WPI Week 199216 Thomson Scientific, London, GB; AN 1992-128843 XP002695626, & JP H04 73211 A (KURAY PILOT INK KK) 9 mars 1992 (1992-03-09)

## Description

La présente invention concerne de manière générale un matériau composite thermochrome (notamment sous forme de fibres, et son procédé de fabrication.

Pour conférer des propriétés thermochromes à des fibres (et par extension à des tissus obtenus à partir de ces fibres) en matériau polymère, il est connu de déposer à leur surface un film de peinture thermochrome. Toutefois, l'inconvénient d'un film de peinture thermochrome est sa faible résistance aux aléas extérieurs, et dans le cas d'un tissu à l'usure, au lavage ou à la friction des fibres entre elles.

Pour éviter ces inconvénients, l'idéal serait de réussir à incorporer les pigments dans une fibre polymère dont une dimension caractéristique principale (diamètre ou épaisseur selon qu'il s'agit d'une fibre est de l'ordre du micron. Mais cela présente beaucoup de difficultés. En effet, parmi les pigments thermochromes actuellement existants sur le marché et pouvant être incorporés dans un matériau polymère, on trouve les cristaux liquides et les pigments organiques, comme par exemple les pigments commercialisés par les sociétés Euracli et Gem'Innov. Mais de tels pigments nécessitent d'être encapsulés pour les protéger lors de leur utilisation, comme par exemple les pigments thermochromes décrits dans la demande de brevet européen EP 1 221 500. Etant donné que la taille des capsules est de l'ordre de quelques micromètres, elles sont difficilement incorporables dans des fibres textiles de quelques micromètres de diamètre également. Par ailleurs, ces capsules sont très sensibles aux forces de cisaillement (pouvant notamment intervenir lors de leur préparation).

Or, la demanderesse a maintenant découvert comment incorporer certains pigments thermochromes particuliers dits à transition de spin sans les encapsuler à l'intérieur de fibres en matériau polymère, et tout en remédiant aux inconvénients précités. En effet, les pigments n'étant pas encapsulés, ils peuvent être incorporés dans des fibres textiles de quelques micromètres de diamètre. Etant donné qu'il est possible d'intégrer les pigments à l'intérieur d'une fibre ils peuvent être plus facilement manipulables et résister aux aléas extérieurs précités.

La présente invention a donc pour objet un matériau composite thermochrome se présentant sous forme de fibre et comprenant au moins un matériau polymère et des pigments thermochromes inclus dans la masse dudit matériau polymère, lesdits pigments thermochromes étant des composés présentant une transition de spin.

Le matériau composite selon l'invention présente la particularité de changer de couleur à une température dite de transition (située entre -150°C et +160°C) lorsque la température varie.

A titre de pigments thermochromes à transition de spin utilisables dans le cadre de la présente invention, on peut notamment citer ceux décrits dans les demandes de brevet français FR 2917410, FR 2941458, FR 2894581 et FR 2963015, qui sont actuellement distribués sous la marque OliKrom®. Le changement de couleur de ces pigments à transition de spin peut être réversible ou irréversible. De tels pigments peuvent être de différentes couleurs, de taille micrométrique ou nanométrique. En plus d'être sensibles à la température, ils peuvent également changer de couleur sous l'effet d'une pression mécanique (effet piézo-chrome), d'une irradiation lumineuse (effet photochrome), ou de la présence de gaz (H₂S, pyridine, CS₂, benzène, ...), ce qui élargit encore d'avantage le champ de leurs applications

Selon un premier mode de réalisation avantageux de la présente invention, le matériau polymère du matériau composite selon l'invention est un matériau polymère thermoplastique choisi dans le groupe constitué des polyamides, des polyoléfines, des polyacétals, des polycétones, des polyesters, de l'acide polylactique, et des polyfluoropolymères. De tels matériaux polymères présentent l'avantage de présenter une température de fusion tf suffisamment basse (notamment comprise entre 40°C et 230°C) pour pouvoir être extrudés à une température inférieure à la température de dégradation des pigments thermochromes qui est de l'ordre de 250°C.

Pour un tel mode de réalisation, les pigments thermochromes peuvent avantageusement représenter entre 0,05% et 30% en poids, et de préférence entre 10 et 20% en poids du poids total dudit matériau composite thermochrome.

Selon l'invention le matériau composite thermochrome se présente sous forme d'une fibre, dont le diamètre peut avantageusement être compris entre 10 µm et 500 µm, et de préférence entre 10 µm et 100 µm. Un tel matériau composite peut être obtenu par extrusion à l'aide d'une filière classique conformément à une autre variante du procédé selon l'invention dans lequel la mise en forme se fait par extrusion (ou voie fondue), comme décrit ci-après.

De manière avantageuse, le matériau composite selon l'invention peut être une fibre multi-filaments, pouvant notamment comprendre entre 40 et 100 filaments par fibre.

Les fibres composites selon l'invention peuvent être des fibres bicomposantes, c'est à dire des fibres constituées de deux composants présentant des propriétés physiques ou chimiques différentes sur toute la longueur de la fibre. De telles fibres comprennent :
- deux matériaux polymères différents, dont l'un au moins comprend les pigments thermochromes (fibre bimatière), ou
- deux matériaux polymères identiques, dont l'un est exempt de pigments thermochromes (fibre monomatière), ou
- deux matériaux polymères identiques ou différents, comprenant chacun des pigments différents en couleur et/ou en température de transition.

La structure de la fibre peut alors être de type âme-gaine, trilobée, étoilées, côte à côte, ile-mer, quartier d'orange, etc.

On citera en particulier le cas d'une âme conductrice électrique obtenu à partir d'un polymère thermoplastique chargé en particules conductrices, comme par exemple des nanotubes de carbone.

Selon l'invention, le matériau polymère est choisi parmi les homopolymères et copolymères d'alcool vinylique, les polymères acryliques, l'aramide, l'alginate, le chitosan, et les polymères cellulosiques. Un tel matériau composite peut être obtenu en mélangeant le matériau polymère en solution dans une dispersion colloïdale de pigments thermochromes. La solution ainsi réalisée est ensuite injectée dans un bain de coagulation (statique ou en écoulement) qui induit la coagulation du polymère sous forme de filaments, dans lesquels les pigments thermochromes se trouvent alors piégés. Ces filaments thermochromes sont rassemblés, à la sortie du bain de coagulation en une fibre, dont le diamètre peut avantageusement être compris entre 10 µm et 500 µm. Ces fibres peuvent ensuite être lavées, séchées, étirées et bobinées.

Dans le cadre de ce mode de réalisation, les pigments thermochromes peuvent avantageusement représenter entre 5% et 50% en poids, et de préférence de l'ordre de 45% en poids du poids total dudit matériau polymère.

Le matériau composite selon l'invention présente un grand intérêt dans le domaine du textile, car les fibres composites selon l'invention peuvent être utilisées pour réaliser des tissus thermochromes tissés ou non, ou encore des tissus tricotés.

La présente invention a donc encore pour objet des tissus ou mats comprenant des fibres composites thermochromes selon l'invention, dans lequel lesdites fibres peuvent être liées entre elles par une composition polymérique. Dans le cas de tissus, les fibres peuvent être tricotées, tissées ou non tissées.

De tels tissus ou mats peuvent notamment servir à la réalisation de tissus techniques pour des vêtements de sport, des vêtements de camouflage, des vêtements servant de capteurs (de gaz, ou de température en particulier), des géotextiles, des combinaisons de plongée, des uniformes de pompier ou des gilets pare-balles, et de manière plus générale des vêtements d'extérieurs. De tels tissus peuvent également servir à la réalisation de chaussures, de couvertures, de duvets, de couettes, de draps, d'oreillers, de rideaux, de nappes, de pansements et de bandages, des emballages pour le transport de pièces, ou encore des tissus pour sièges de voiture.

La présente invention a encore pour objet un procédé de fabrication d'un matériau composite sous forme de fibre comprenant :
- une étape de mise en dispersion de pigments thermochromes présentant une transition de spin dans un matériau polymère se trouvant à l'état solide, ou à l'état liquide en association avec un tensioactif;
- une étape de mise en forme du matériau en fibre
- une étape d'étirement de la fibre ainsi obtenue,
ledit procédé étant caractérisé en ce que l'étape de mise en dispersion des pigments thermochromes dans le matériau polymère est, d'une part, exempte d'une étape d'encapsulation des pigments thermochromes et, d'autre part, comprend:
- la préparation d'une solution d'un polymère choisi parmi les homopolymères et copolymères d'alcool vinylique, les polymères acryliques, l'aramide, l'alginate, le chitosan, et les polymères cellulosiques,
- la préparation d'une dispersion colloïdale pigmentaire comprenant :
   ∘ le mélange d'au moins un pigment thermochrome et d'un tensioactif dans un solvant,
   ∘ l'agitation magnétique, ou par ultrasons, ou par broyeur à billes du mélange ainsi obtenu pour obtenir une dispersion colloïdale,
- le mélange de la dispersion pigmentaire colloïdale et de la solution polymérique pour obtenir un mélange polymérique pigmenté; puis
- l'introduction, via des buses, du mélange polymérique pigmenté ainsi obtenu dans un bain de coagulation, conduisant à la formation d'une pluralité de filaments incorporant les pigments thermochromes non encapsulés, qui sont rassemblés en une fibre à la sortie du bain de coagulation.

En ce qui concerne la solution polymère, le solvant peut avantageusement être choisi parmi l'eau, le diméthylsulfoxyde (DMSO), la glycérine, l'éthylène glycol, le diéthylène glycol, le triéthylène glycol, le diéthylène triamine, l'éthylène diamine, le phénol, le DMF, le diméthylacétamide, la NMP, et leurs mélanges. On utilisera de préférence l'eau, de DMSO ou un mélange de DMSO et d'eau.

En ce qui concerne la dispersion colloïdale pigmentaire, les pigments utilisés sont tels que définis précédemment. Le tensioactif est avantageusement un agent stabilisant qui est lié aux pigments de façon non covalente. Le tensioactif est de préférence un tensioactif non ionique ou copolymère à blocs avec des blocs hydrophiles et des blocs hydrophobes, qui peut avantageusement être choisi parmi les esters de polyols (esters d'acide gras et de sorbitane notamment de la famille des Tween®), esters d'acide gras et de glycérol, esters d'acide gras et de sucrose, esters d'acide gras et de polyéthylèneglycol), les polysiloxanes modifiés par des polyéthers, les éthers d'alcools gras et de polyéthylène glycol (par exemple tensioactif de la famille des Brij®), les alkylpolyglycosides, la carboxyméthylcellulose et les copolymères blocs polyéthylène-polyéthylène glycol.

Le bain de coagulation, qui est statique ou en écoulement, sert à induire la coagulation du polymère sous forme de filaments à l'intérieur desquels les pigments thermochromes se trouvent alors piégés (et non pas uniquement à leur surface) et que l'on rassemble en une fibre à la sortie du bain de coagulation.

De manière avantageuse, on utilisera comme bain de coagulation une solution d'au moins un sel alcalin ou déshydratant, seul ou en mélange dans un solvant. Une solution typique de coagulation pour le PVA est une solution aqueuse de sulfate de sodium saturée, soit concentrée à 320 g/L à 40°C. Elle peut également être composée d'hydroxyde de sodium, de sulfate d'ammonium. Le solvant du bain de coagulation peut être l'eau, un alcool (par exemple le méthanol, l'éthanol, le butanol, le propanol, ou l'isopropanol), un polyol, un gycol, une cétone (par exemple l'acétone, la méthyl-éthyl cétone, ou la méthyl isobutyl cétone), le benzène, le toluène, et leurs mélanges.

A la sortie du bain de coagulation, la fibre thermochrome ainsi formée peut être lavée dans un ou plusieurs bains de lavage, afin d'enlever toute trace de sulfate de sodium pouvant nuire aux propriétés de la fibre. Les bains de lavage peuvent être composés d'eau, d'une solution de sulfate de sodium à 50 g/L, ou d'une solution aqueuse contenant entre 0,05 et 5% en poids de sels de borate, par exemple du tétraborate de sodium.

Après le lavage de la fibre selon l'invention, celle-ci peut avantageusement être séchée, puis bobinée. La fibre peut également être étirée à chaud par passage sur des rouleaux chauffants, après le séchage et avant le bobinage.

D'autres avantages et particularités de la présente invention résulteront de la description qui va suivre, donnée à titre d'exemple non limitatif et faite en référence à la figure unique annexée, qui représente une vue schématique en perspective d'une installation pour réaliser des fibres thermochromes par le procédé selon l'invention selon la voie dite par coagulation.

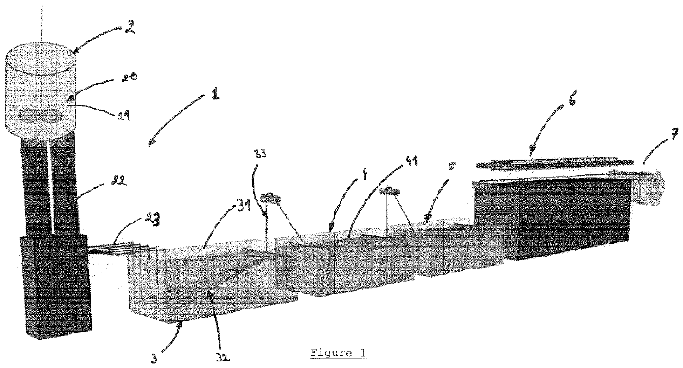

L'installation de filage par coagulation 1 représentée sur la figure 1 comporte:
▪ un dispositif de mélange 2 d'une dispersion colloïdale de pigments thermochromes 20 et d'une solution polymérique 21 à base de PVA pour former un mélange polymérique thermochrome, le dispositif de mélange 2 étant relié à une pompe 22 comportant
▪ des buses d'injection dont le diamètre est compris entre 10µm et 1mm et communiquant avec
▪ un bain de coagulation 3 (statique sur la figure 1) comprenant une solution aqueuse 31 de sulfate de sodium saturée (concentrée à 320 g/L à 40°C), et dans lequel le mélange polymérique thermochrome est injecté sous forme de jets, qui se solidifient dans le bain quasi instantanément en filaments 32, que l'on rassemblent en une seule fibre 33 à la sortie du bain de coagulation 3,
▪ un premier bain de lavage 4 pour enlever toute trace de sulfate de sodium (nuisible potentiellement aux propriétés thermochromes et mécaniques de la fibre), le bain de lavage comprenant une solution aqueuse 41 de sulfate de sodium à 50g/L,
▪ un deuxième bain de lavage 5 constitué uniquement d'eau pour éliminer toute trace de sulfate de sodium sur la fibre issu du premier bain de lavage,
▪ un dispositif de séchage 6 pour sécher la fibre en provenance du bain de lavage 5, puis
▪ un dispositif de bobinage 6 de la fibre séchée.

L'invention est illustrée plus en détail dans l'exemple unique suivant, sans lequel sauf indication contraire, tous les pourcentages et parties sont exprimés en pourcentages massiques.

### EXEMPLE 1

3.5% en masse de pigments thermochromes de couleur rose de la famille des complexes de type Fer(II) R-triazoles, précisement le complexe de formule générale [Fe(Htrz)2(trz)]BF4 (avec Htrz = 1,2,4-triazole et trz = anion triazolato) sont dispersés dans de l'eau à l'aide de 1.2% en masse de Brij78 à titre de tensioactif.

Cette dispersion est mélangée avec une solution aqueuse d'alcool polyvinylique (PVA) de masse molaire 195 kg/mol et de concentration massique de 8%. Le mélange se fait à 50 / 50 en masse. On obtient ainsi la solution de filage.

Cette solution de filage est injectée via 3 buses d'injection dans une solution aqueuse de sulfate de sodium à 320 g/L (bain de coagulation). Une fibre à 3 filaments se forme.

Cette fibre est ensuite successivement lavée dans un premier bain de lavage contenant du sulfate de sodium à 50 g/L dans de l'eau, puis dans un second bain de lavage contenant de l'eau.

La fibre est ensuite séchée puis bobinée. On obtient au final une fibre constituée de 3 brins de diamètre 30 µm et contenant 46% en masse de pigment.

Lorsque cette fibre est soumise à une température au dessus de 77°C, on observe un changement de couleur. Sa couleur passe du rose au blanc. Cette transition est réversible et la fibre redevient blanche lorsque sa température est inférieure à 57°C.

### EXEMPLES 2 à 5

On réalise, de la même manière qu'à l'exemple 1, des fibres thermochrome en PVA, en changeant :
- soit la concentration en pigments de couleur rose de la famille des complexes de type Fer(II) R-triazoles (identiques à ceux de l'exemple 1 : exemples 2 et 3),
- soit la couleur des pigments de même formule générale que ceux de l'exemple 1 (pigments orange et violet des exemples 4 et 5),

Dans le tableau de résultats 1, sont rassemblées les températures de transition observées, tant en descente qu'en montée, pour les exemples 2 à 5. Le tableau 1 montre que par le procédé de coagulation différentes couleurs sont accessibles pour une même température de transition.

**Tableau 1**

| Exemples | Polymère | Pigment | Concentration massique du pigment dans la fibre | Température de transition (montée) | Température de transition (descente) |
|---|---|---|---|---|---|
| 2 | PVA | rose→blanc | 15 | 77°C | 57°C |
| 3 | PVA | rose→blanc | 46 | 77°C | 57°C |
| 4 | PVA | orange→jaune | 46 | 77°C | 57°C |
| 5 | PVA | violet→bleu | 46 | 77°C | 57°C |

### EXEMPLES 6 à 17

On réalise des fibres thermochromes selon l'invention par voie fondue), dans lequel la mise en dispersion des pigments thermochromes dans le matériau polymère est réalisée :
- par un pré-mélange à chaud (notamment dans un comalaxeur) du matériau polymère choisi parmi le polyamide PA, l'acide polylactique PLA, et les polyéthylène basse densité PELD et des pigments, qui sont :
   ▪ soit de même formule générale que ceux de l'exemple 1 (de différentes couleur : orange, violet, vert foncé et rose) (exemples 6 à 15),
   ▪ soit des pigments thermochromes de la famille des complexes de type Fer(II) R-triazoles, précisement le complexe de formule générale [Fe(NH2trz)3]Cl2 (avec NH2trz = 4-amino-1,2,4-triazole) (exemple 16),
   ▪ soit des pigments thermochromes de la famille des complexes de type Fer(II) R-triazoles, précisement le complexe de formule générale [Fe(NH2trz)3]Br2 (avec NH2trz = 4-amino-1,2,4-triazol) (exemple 17), et
- puis extrusion du matériau polymère ainsi chargé en pigments à une température de 180°C pour le PLA, de 210°C pour le PA et de 160°C pour le PELD.

Dans le tableau de résultats 2, sont rassemblées les températures de transition observées, tant en descente qu'en montées pour les exemples 6 à 17. Le tableau 2 montre que par le procédé d'extrusion, de nombreuses combinaisons polymère / pigments ont été testées.

**Tableau 2**

| Exemples | Polymère | Pigment | Concentration massique du pigment dans la fibre | Température de transition (montée) | Température de transition (descente) |
|---|---|---|---|---|---|
| 6 | PLA | orange→jaune | 10 | 77°C | 52°C |
| 7 | PLA | violet→bleuc | 15 | 77°C | 52°C |
| 8 | PLA | Vert foncé→vert clair | 10 | 77°C | 52°C |
| 9 | PA | rose→blanc | 10 | 77°C | 57°C |
| 10 | PA | rose→blanc | 5 | 77°C | 57°C |
| 11 | PELD | Vert foncé→vert clair | 10 | 77°C | 52°C |
| 12 | PELD | violet→bleu | 10 | 77°C | 52°C |
| 13 | PELD | rose→blanc | 10 | 77°C | 57°C |
| 14 | PELD | rose→blanc | 10 | 102°C | 67°C |
| 15 | PELD | rose→blanc | 10 | 77°C | 52°C |
| 16 | PELD | rose→blanc | 10 | 50°C | 30°C |
| 17 | PELD | rose→blanc | 10 | 30°C | 30°C |

## Revendications

1. Procédé de fabrication d'un matériau composite sous forme de fibre, comprenant :
- une étape de mise en dispersion de pigments thermochromes présentant une transition de spin dans un matériau polymère se trouvant à l'état solide, ou à l'état liquide en association avec un tensioactif ;
- une étape de mise en forme du matériau en fibre ;
- une étape d'étirement de la fibre ainsi obtenue,
ledit procédé étant **caractérisé en ce que** l'étape de mise en dispersion des pigments thermochromes dans le matériau polymère est, d'une part, exempte d'une étape d'encapsulation des pigments thermochromes et, d'autre part, comprend :
- la préparation d'une solution d'un polymère choisi parmi les homopolymères et copolymères d'alcool vinylique, les polymères acryliques, l'aramide, l'alginate, le chitosan, et les polymères cellulosiques,
- la préparation d'une dispersion colloïdale pigmentaire comprenant :
- le mélange d'au moins un pigment thermochrome et d'un tensioactif dans un solvant,
- l'agitation magnétique, ou par ultrasons, ou par broyeur à billes du mélange ainsi obtenu pour obtenir une dispersion colloïdale,
- le mélange de la dispersion pigmentaire colloïdale et de la solution polymérique pour obtenir un mélange polymérique pigmenté; puis
- l'introduction, via des buses, du mélange polymérique pigmenté ainsi obtenu dans un bain de coagulation, conduisant à la formation d'une pluralité de filaments incorporant les pigments thermochromes non encapsulés, qui sont rassemblés en une fibre à la sortie du bain de coagulation.

2. Matériau composite thermochrome susceptible d'être obtenu par le procédé tel que défini selon la revendication 1.

3. Tissu ou mat comprenant des fibres telles que définies selon la revendication 2, dans lequel lesdites fibres sont liées entre elles par une composition polymérique.

4. Utilisation du tissu ou mat selon la revendication 3 pour réaliser l'une au moins parmi des pièces suivantes : (a) geotextile ; (b) gilets pare-balles.

## Patentansprüche

1. Verfahren zur Herstellung eines Verbundmaterials in Faserform, umfassend:
- einen Schritt des Dispergierens thermochromer Pigmente, aufweisend einen Spin-Übergang, in ein Polymermaterial, das sich in festem Zustand befindet, oder in flüssigem Zustand in Kombination mit einem Tensid;
- einen Schritt des Formens des Materials als Faser;
- einen Schritt des Streckens der derart erhaltenen Faser,
wobei das Verfahren **dadurch gekennzeichnet ist, dass** der Schritt des Dispergierens der thermochromen Pigmente in das Polymermaterial zum einen ohne einen Schritt des Verkapselns der thermochromen Pigmente erfolgt und zum anderen umfasst:
- das Herstellen einer Lösung eines Polymers, ausgewählt aus den Homopolymeren und Copolymeren von Vinylalkohol, den Acrylpolymeren, dem Aramid, dem Alginat, dem Chitosan und den Cellulosepolymeren,
- das Herstellen einer kolloidalen Pigmentdispersion, umfassend:
-- das Mischen mindestens eines thermochromen Pigments und eines Tensids in einem Lösungsmittel,
-- das Rühren durch Magnet oder durch Ultraschall oder durch Kugelmühle des derart erhaltenen Gemischs, um eine kolloidale Dispersion zu erhalten,
- das Mischen der kolloidalen Pigmentdispersion und der Polymerlösung, um ein pigmentiertes Polymergemisch zu erhalten; dann
- das Einleiten, über Düsen, des derart erhaltenen pigmentierten Polymergemischs in ein Koagulationsbad, was zur Bildung einer Vielzahl von Filamenten führt, die die nicht gekapselten thermochromen Pigmente einschließen, die beim Ausgang aus dem Koagulationsbad in einer Faser zusammengefasst sind.

2. Thermochromes Verbundmaterial, das durch das Verfahren nach Anspruch 1 gewinnbar ist.

3. Gewebe oder Matte, umfassend Fasern nach Anspruch 2, wobei die Fasern untereinander durch eine Polymerzusammensetzung verbunden sind.

4. Verwendung des Gewebes oder der Matte nach Anspruch 3 für die Herstellung mindestens eines der folgenden Teile: (a) Geotextil; (b) kugelsichere Westen.

## Claims

1. A method for manufacturing a composite material provided in the form of a fibre, comprising:
- a step of dispersing spin transition thermochromic pigments in a polymeric material in the solid state or in the liquid state in combination with a surface-active agent;
- a step of shaping the material into a fibre;
- a step of stretching the resulting fibre,
said method being **characterised in that** the step of dispersing thermochromic pigments in the polymeric material is, on the one hand, devoid of any step of encapsulating the thermochromic pigments and, on the other hand, comprises:
- preparing a solution of a polymer selected from the group consisting of vinyl alcohol homopolymers and copolymers, acrylic polymers, aramid, alginate, chitosan, and cellulose polymers,
- preparing a colloidal pigment dispersion comprising:
-- mixing at least one thermochromic pigment and a surface-active agent in a solvent,
-- stirring magnetically, or ultrasonically, or using a ball mill, the resulting mixture to obtain a colloidal dispersion,
- mixing the colloidal pigment dispersion and the polymeric solution to obtain a pigmented polymeric mixture; then
- introducing, via nozzles, the resulting pigmented polymeric mixture into a coagulation bath, resulting in the formation of a plurality of filaments incorporating the non-encapsulated thermochromic pigments, which are assembled into a fibre at the output of the coagulation bath.

2. A thermochromic composite material capable of being obtained by the method as defined according to claim 1.

3. A fabric or mat comprising fibres as defined according to claim 2, wherein said fibres are linked to one another by a polymeric composition.

4. A use of the fabric or mat according to claim 3 to produce at least one of the following items: (a) a geotextile; (b) bulletproof vests.
